# EUROPÄISCHE PATENTSCHRIFT

(11) **EP 1 993 878 B1**
(45) Veröffentlichungstag und Bekanntmachung des Hinweises auf die Patenterteilung: **17.01.2018**
(21) Anmeldenummer: 07704477.4
(22) Anmeldetag: 09.02.2007
(51) Int. Cl.: B60R 16/03, H04L 1/00

(54) **STEUERVORRICHTUNG**
CONTROL APPARATUS
DISPOSITIF DE COMMANDE

(30) Priorität: 02.03.2006 DE 102006009658
(43) Veröffentlichungstag der Anmeldung: 26.11.2008
(73) Patentinhaber: Robert Bosch GmbH, 70442 Stuttgart (DE)
(72) Erfinder: NOTTEBOM, Bernd, 71726 Benningen (DE); TEPASS, Bernd, 71717 Beilstein (DE)
(86) Internationale Anmeldenummer: PCT/EP2007/051261
(87) Internationale Veröffentlichungsnummer: WO 2007/099023

(56) Entgegenhaltungen:
- EP-A1- 0 113 478
- EP-A2- 0 399 491
- FR-A1- 2 726 675

## Beschreibung

### Stand der Technik

Die vorliegende Erfindung betrifft eine Steuervorrichtung, insbesondere eine Endstufenvorrichtung eines Kraftfahrzeugsteuergerätes.

In Kraftfahrzeugen werden vielfältige Prozesse durch Mikroprozessoren gesteuert. Typischerweise geben die Mikroprozessoren jedoch Signale mit geringem Pegel aus. Die zu steuernden Einrichtungen benötigen jedoch teilweise große Ströme oder hohe Spannungen. Eine Transformation der geringen Signalpegel auf die höheren Signalpegel wird durch Endstufen erreicht. Zweckmäßigerweise werden die Endstufen möglichst räumlich nahe bei den zu steuernden Einrichtungen angeordnet. Hingegen erweist es sich als zweckmäßig, die steuernden Mikroprozessoren an einem oder wenigen zentralen Orten in dem Kraftfahrzeug anzuordnen. Die Signalübertragung zwischen dem Mikroprozessor und einer Endstufe erfolgt zweckmäßigerweise über eine unidirektionale Datenübertragungsstrecke. Eine solche Datenübertragungsstrecke ist z.B. in der DE 19733748 A1 und der DE 10228905 A1 beschrieben.

Aus der EP 0 113 478 A1 ist ein Endstufenprozessor zur Steuerung von verschiedenen Vorrichtungen in einem Kraftfahrzeug bekannt, mit einer Schaltung zum Empfangen von Datenblöcken mit Steuerbefehlen über einen Datenbus, einer Ein-/Ausgangsstufe zum Ausgeben eines Ausgangssignals gemäß den Steuerbefehlen, einer Fail-Safe Schaltung zur Erzeugung eines Fehlersignals wenn innerhalb einer vorbestimmten Zeit kein Signal empfangen wird sowie einem rücksetzbaren Flip-Flop zum Rückstellen der Ein-/Ausgangsstufe, wenn das Fehlersignal ausgegeben wird.

Eine ähnliche Schaltung ist aus der FR 2 726 675 A1 bekannt.

Die EP 0 399 491 A2 offenbart ein verteiltes, CSMA-basiertes, Kfz-Steuerungsnetzwerk, bei welchem empfangene Datenrahmen auf Übertragungsfehler überprüft werden. Im Fehlerfall informiert ein Steuerknoten alle davon betroffenen Netzwerkknoten darüber durch einen "System Refreshment" Befehl, gefolgt von einem Antwortrahmen, welcher die momentanen Zustände der Eingangsstufen des Steuerknotens angibt. Die vom Übertragungsfehler betroffenen Netzwerknoten empfangen diesen Antwortrahmen und korrigieren daraufhin gegebenenfalls ihre Ausgangsstufen gemäß der angegebenen Eingangszustände. In dem Fahrzeug existieren vielfältige elektrische Störfelder, die das zu übertragende Signal während der Übertragung verfälschen können. Ein Mechanismus, eine fehlerhafte Übertragung auf Seite der Endstufe zu erkennen, bedient sich redundanter Daten, die mit dem Signal übertragen werden. Die Endstufe kann dann anhand der Quersumme oder Parität des übertragenden Signals bestimmen, ob eine fehlerhafte Übertragung vorliegt oder die Integrität des übertragenden Datenblocks gewahrt ist.

Die Datenübertragung zwischen dem Mikroprozessor und der Endstufe erfolgt mit einer hohen Datenübertragungsrate. Bei einer fehlerhaften Übertragung ist es nicht zweckmäßig die Übertragung anzuhalten und den fehlerhaft übertragenen Datenblock erneut zu senden. Die DE 19733748 A1 schlägt diesbezüglich vor, die Übertragung auch im Falle einer fehlerhaften Übertragung eines einzelnen Datenblocks weiter fortzusetzen. Die Endstufe soll in diesem Fall den vormals eingestellten Ausgangszustand beibehalten, bis die nächste korrekte Übertragung eines Datenblocks erfolgt.

Dieses Verfahren und die zugehörige Vorrichtung führen bei manchen zu steuernden Einrichtungen zu Fehlverhalten, da hohe Signalpegel zu lange an diesen anliegen können.

### Offenbarung der Erfindung

Die erfindungsgemäße Steuervorrichtung nach Anspruch 1 bzw. das erfindungsgemäße Verfahren nach Anspruch 6 weist gegenüber dem Stand der Technik den Vorteil auf, dass selbst bei fehlerhafter Datenübertragung keine unzulässig langen Signalpegel an dem Ausgang der Steuervorrichtung anliegen.

Die erfindungsgemäße Steuervorrichtung weist eine Empfangseinrichtung, eine Ausgangsstufe, eine Überprüfungseinrichtung und eine Rückstelleinrichtung auf. Die Empfangseinrichtung dient zum Empfangen wenigstens eines Datenblocks mit Steuerbefehlen aus einem Datenbus, die Ausgangsstufe zum Ausgeben eines Ausgangssignals ansprechend auf die Steuerbefehle, die Überprüfungseinrichtung zum Ausgeben eines Fehlersignals, wenn der wenigstens eine empfangene Datenblock fehlerhaft ist und/oder innerhalb einer vorbestimmten Zeit kein Datenblock empfangen wird, und die Rückstelleinrichtung zum Rückstellen der Ausgangsstufe in einem vordefinierten Zustand, wenn die Überprüfungseinrichtung das Fehlersignal ausgibt.

Der vordefinierte Zustand ist so gewählt, dass zumindest die Ausgänge mit einem möglicherweise kritischen Signalpegel auf einen niedrigen Signalpegel gesetzt werden. Hierbei kann der vordefinierte Zustand auch unter Berücksichtigung des im Moment anliegenden Signalpegels an der Ausgangsstufe ausgewählt werden.

Die Ausgangsstufe kann eine einzelne Ausgangsleitung mit einem zugehörigen Ausgangssignal aufweisen oder eine Mehrzahl von solchen Ausgangsleitungen.

Die Überprüfungseinrichtung überprüft den Datenblock anhand einer Plausibilitätsprüfung, z.B. mit Hilfe von redundanten Daten, wie Paritybits. Die vorbestimmte Zeit kann entsprechend der Taktungsrate des verwendeten Übertragungskanals gewählt werden.

Die Empfangseinrichtung kann zum Empfangen von Datenblöcken aus einem Mikrosekundenbus eingerichtet sein, in den z.B. ein Mikroprozessor seine Steuersignale einspeist. Bei einem Auftreten eines fehlerhaft empfangenen Datenblocks kann es vorteilhaft sein, das Fehlersignal über einen Rückkanal durch eine Ausgangseinrichtung auszugeben.

Ferner kann die Steuervorrichtung einen integrierten Datenspeicher aufweisen, der zum Abspeichern der vordefinierten Zustände eingerichtet ist.

Das erfindungsgemäße Verfahren sieht vor, Datenblöcke mit Steuerbefehlen über einen Datenbus zu empfangen, Ausgangssignale einer Ausgangsstufe entsprechend den Steuerbefehlen festzulegen, die Integrität des empfangenen Datenblocks mit einer Überprüfungseinrichtung zu überprüfen und die Ausgangsstufe in einem vordefinierten Zustand zurückzustellen, wenn die Integrität des empfangenen Datenblocks als nicht gegeben festgestellt wird.

Die vorliegende Erfindung wird nachfolgend anhand eines Ausführungsbeispiels und von Figuren erläutert. In den Figuren zeigen:
- Fig. 1: ein schematisches Blockdiagramm einer Ausführungsvorrichtung, die an einen Mikroprozessor angeschlossen ist, und
- Fig. 2: ein Flussdiagramm einer Ausführungsform zum Betreiben der Steuervorrichtung in Fig. 1.

Die Beschreibung der Ausführungsbeispiele ist nicht einschränkend für den Umfang der Erfindung, der durch die Ansprüche festgelegt ist.

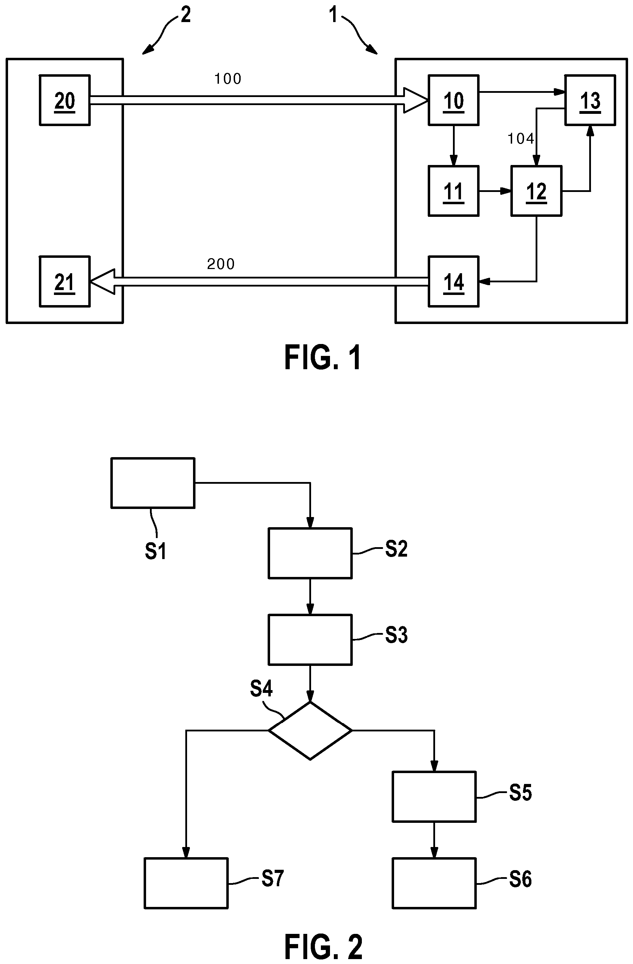

In Fig. 1 ist ein Mikroprozessor 2 und mindestens eine Endstufe 1, z.B. einer Kfz-Steuervorrichtung dargestellt. Der Mikroprozessor 2 weist eine Ausgabeschnittstelle 20 auf. Die Ausgabeschnittstelle kann die Steuerbefehle parallel ausgeben. Falls die Anzahl der physikalischen Übertragungsleitungen möglichst gering gehalten werden soll, ist eine serielle Datenübertragung zweckmäßiger. Die Daten werden entsprechend einem vorbestimmten Datenübertragungsprotokoll in einzelne Datenblöcke zerlegt und übertragen. Ein solches Datenübertragungsprotokoll kann z.B. ein Mikrosekundenbusprotokoll sein.

Die Endstufe 1 weist eine dem gewählten Übertragungsprotokoll entsprechende Empfangseinrichtung 10 auf. Die Übertragung zwischen der Ausgabeschnittstelle 20 und der Empfangseinrichtung 10 der Endstufe 1 erfolgt unidirektional. Die Ausgangsschnittstelle ist somit als reiner Ausgang und die Eingangseinrichtung als reiner Eingang konzipiert. Hierdurch wird der Aufwand für die Realisierung dieser Einrichtungen verglichen zu einer bidirektionalen Kommunikation und den dafür notwendigen Einrichtungen gering gehalten.

Die Empfangseinrichtung 10 ist intern in der Endstufe 1 mit der Ausgangsstufe 13 verbunden. Die Ausgangsstufe 13 ist typischerweise eine gängige Verstärkerschaltung. Das Ausgangssignal 104 der Ausgangsstufe wird an eine zu steuernde Einrichtung angelegt, z.B. ein Ventil.

Das empfangene Datenpaket wird von der Empfangseinrichtung 10 zugleich an eine Überprüfungseinrichtung 11 weitergeleitet. Diese Überprüfungseinrichtung 11 bestimmt, ob das empfangene Datenpaket während der Übertragung verfälscht wurde, d.h. die Integrität des Datenpakets nicht gewahrt blieb.

Hierbei können verschiedenste Überprüfungsverfahren angewandt werden. Eine Möglichkeit besteht darin, zusätzlich zu dem Datenpaket redundante Daten zu übertragen. Ein redundantes Datum kann z.B. die Quersumme des Datenblocks sein. Eine andere Möglichkeit besteht darin, ein sogenanntes Paritybit mit zu übertragen, das die Parität des Datenblocks angibt. Wird durch die Überwachungseinrichtung bestimmt, dass die Datenübertragung fehlerhaft ist, gibt die Überwachungseinrichtung 11 ein Fehlersignal 111 aus. Dieses Fehlersignal 111 steuert eine Rückstelleinrichtung 12, die einen in ihr gespeicherten vorbestimmten Zustand an die Ausgabestufe 13 ausgibt. Die Ausgabestufe 13 liest den vorbestimmten Zustand ein und legt einen Signalpegel an ihrem Ausgang als Ausgangssignal 104 an, der diesen vorbestimmten Zustand entspricht, anstelle des fehlerhaft übertragenen Datenblockes.

Falls einzelne Datenpakete nicht übermittelt werden oder gar keine übermittelt werden entspricht dies im Prinzip auch einer fehlerhaften Datenübertragung. Prüfmechanismen erkennen auch ein solches Ausbleiben der Datenpakete.

Die Überwachungseinrichtung 11 kann das Fehlersignal oder ein dem Fehlersignal entsprechendes Überwachungssignal 110 über eine Ausgabeeinrichtung 14 und einen Rückkanal 200 an den Mikroprozessor 2 oder eine andere Einrichtung weiterleiten.

Eine Variante des vorhergehenden Ausführungsbeispiels weist eine Rückstelleinrichtung 12 mit einem Datenspeicher auf, in dem mehr als nur ein vorbestimmter Zustand abgespeichert ist. Die Auswahl des auszugebenden vorbestimmten Zustandes ist abhängig von dem Zustand oder dem Ausgangssignal 104 der Ausgangsstufe 13.

Die Ausgangsstufeneinrichtung 13 kann mehrere einzelne Ausgangsstufen aufweisen. Den einzelnen Ausgangsstufen kann ein einzelnes Bit oder eine Bitgruppe des Datenblocks zugewiesen sein. Eine weitere Möglichkeit besteht darin, die einzelnen Ausgangsstufen nacheinander sequentiell durch aufeinanderfolgende Datenblöcke anzusprechen.

In Fig. 2 ist als Flussdiagramm schematisch der Ablauf eines Ausführungsbeispiels beschrieben. Datenblöcke werden sequentiell von dem Mikroprozessor oder der Steuervorrichtung übertragen. Nachdem ein einzelner solcher Datenblock übertragen wird (S1), wird dieser durch die Empfangseinrichtung der Endstufe empfangen (S2). Die Prüfeinrichtung überprüft den Datenblock auf Integrität (S3). Wird bei der Überprüfung erkannt, dass der Datenblock fehlerhaft ist (S4), wird die Endstufe in einen vordefinierten Zustand gesetzt (S5). Die Endstufe gibt dann ein Ausgangssignal aus, das dem vordefinierten Zustand entspricht (S6). Ergibt sich bei der Überprüfung des empfangenen Datenblocks, dass dieser richtig übertragen wurde, gibt die Ausgangsstufe der Endstufe ein dem Datenblock entsprechendes Ausgangssignal aus (S7).

## Patentansprüche

1. Steuervorrichtung eines Kraftfahrzeug-Steuergeräts, mit
einer Empfangseinrichtung (10) zum Empfangen wenigstens eines Datenblocks mit Steuerbefehlen aus einem Datenbus (100),
einer Ausgangsstufe (13) zum Ausgeben eines Ausgangssignals ansprechend auf die Steuerbefehle,
einer Überprüfungseinrichtung (11) zum Ausgeben eines Fehlersignals, wenn der wenigstens eine empfangene Datenblock fehlerhaft ist, und
einer Rückstelleinrichtung (12) zum Rückstellen der Ausgangsstufe in einen vordefinierten Zustand, wenn die Überprüfungseinrichtung (11) das Fehlersignal ausgibt.

2. Steuervorrichtung nach Anspruch 1, wobei die Empfangseinrichtung (10) zum unidirektionalen Empfangen wenigstens eines Datenblocks mit Steuerbefehlen aus einem seriellen Datenübertragungsprotokoll oder einem Mikrosekundenbusprotokoll eingerichtet ist.

3. Steuervorrichtung nach Anspruch 1 oder 2 mit einer Ausgangseinrichtung (14) zum Ausgeben des Fehlersignals an einen Rückkanal (200).

4. Steuervorrichtung nach einem der Ansprüche 1 bis 3, wobei die Rückstelleinrichtung (12) einen integrierten Datenspeicher aufweist, in dem der vordefinierte Zustand abgespeichert ist.

5. Steuervorrichtung nach einem der Ansprüche 1 bis 3, wobei die Rückstelleinrichtung (12) einen integrierten Datenspeicher aufweist, in dem mehr als ein vorbestimmter Zustand abgespeichert ist, wobei die Auswahl des an die Ausgangsstufe (13) auszugebenden vordefinierten Zustandes abhängig von dem Ausgangssignal der Ausgangsstufe (13) erfolgt.

6. Verfahren zum Steuern einer Steuervorrichtung eines Kraftfahrzeug-Steuergeräts, mit den Schritten
a) Empfangen von wenigstens einem Datenblock mit Steuerbefehlen über einen Datenbus (100),
b) Überprüfen der Integrität des empfangenen Datenblocks mit einer Überprüfungseinrichtung (11),
c) Rückstellen einer Ausgangsstufe der Steuervorrichtung (13) in einen vordefinierten Zustand, wenn die Integrität des empfangenen Datenblocks als nicht gegeben festgestellt wird, wobei die Ausgangsstufe (13) zum Ausgeben eines Ausgangssignals ansprechend auf die Steuerbefehle ausgestaltet ist.

7. Verfahren nach Anspruch 6, wobei beim Rückstellen der vordefinierte Zustand aus einem Datenspeicher der Steuervorrichtung geladen wird, die in der Steuervorrichtung integriert ist.

8. Verfahren nach einem der Ansprüche 6 bis 7, wobei beim Auftreten einer fehlenden Integrität ein Fehlersignal über einen Rückkanal an eine Datenverarbeitungseinrichtung ausgegeben wird, die die Datenblöcke sendet.

9. Verfahren nach einem der Ansprüche 6 bis 8, wobei vor der Überprüfung das Ausgangssignal der Ausgangsstufe (13) entsprechend den Steuerbefehlen festgelegt wird.

10. Verfahren nach einem der Ansprüche 6 bis 9, wobei mehr als ein vorbestimmter Zustand abgespeichert ist, wobei die Auswahl des vordefinierten Zustandes abhängig von dem Ausgangssignal (104) der Ausgangsstufe (13) erfolgt.

## Claims

1. Control apparatus of a motor vehicle controller, having
a reception device (10) for receiving at least one data block having control commands from a data bus (100),
an output stage (13) for outputting an output signal in response to the control commands,
a checking device (11) for outputting an error signal if the at least one received data block is erroneous, and
a restoring device (12) for restoring the output stage to a predefined state if the checking device (11) outputs the error signal.

2. Control apparatus according to Claim 1, wherein the reception device (10) is set up for unidirectionally receiving at least one data block having control commands from a serial data transmission protocol or a microsecond bus protocol.

3. Control apparatus according to Claim 1 or 2, having an output device (14) for outputting the error signal to a return channel (200).

4. Control apparatus according to one of Claims 1 to 3, wherein the restoring device (12) has an integrated data memory that stores the predefined state.

5. Control apparatus according to one of Claims 1 to 3, wherein the restoring device (12) has an integrated data memory that stores more than one predetermined state, the selection of the predefined state to be output to the output stage (13) being made on the basis of the output signal of the output stage (13).

6. Method for controlling a control apparatus of a motor vehicle controller, having the steps of
a) receiving at least one data block having control commands via a data bus (100),
b) checking the integrity of the received data block using a checking device (11),
c) restoring an output stage of the control apparatus (13) to a predefined state if the integrity of the received data block is found not to exist, the output stage (13) being configured to output an output signal in response to the control commands.

7. Method according to Claim 6, wherein
for the restoring the predefined state is loaded from a data memory of the control apparatus that is integrated in the control apparatus.

8. Method according to either of Claims 6 and 7, wherein
when a lack of integrity occurs an error signal is output via a return channel to a data processing device that sends the data blocks.

9. Method according to one of Claims 6 to 8, wherein the check is preceded by the output signal of the output stage (13) being stipulated in accordance with the control commands.

10. Method according to one of Claims 6 to 9, wherein more than one predetermined state is stored, the selection of the predefined state being made on the basis of the output signal (104) of the output stage (13).

## Revendications

1. Dispositif de commande d'un appareil de commande de véhicule automobile, comportant
un moyen de réception (10) destiné à recevoir au moins un bloc de données comportant des ordres de commande en provenance d'un bus de données (100),
un étage de sortie (13) destiné à fournir en sortie un signal de sortie correspondant aux ordres de commande, un moyen de vérification (11) destiné à fournir en sortie un signal d'erreur lorsque ledit au moins un bloc de données reçu contient des erreurs, et
un moyen de réinitialisation (12) destiné à réinitialiser l'étage de sortie à un état prédéfini lorsque le moyen de vérification (11) fournit en sortie le signal d'erreur.

2. Dispositif de commande selon la revendication 1, dans lequel le moyen de réception (10) est conçu pour recevoir de manière unidirectionnelle au moins un bloc de données contenant des ordres de commande sur la base d'un protocole de transmission de données série ou d'un protocole de bus microseconde.

3. Dispositif de commande selon la revendication 1 ou 2, comportant un moyen de sortie (14) destiné à fournir en sortie le signal d'erreur sur un canal de retour (200).

4. Dispositif de commande selon l'une quelconque des revendications 1 à 3, dans lequel le dispositif de réinitialisation (12), comporte une mémoire de données intégrée dans laquelle est stocké l'état prédéfini.

5. Dispositif de commande selon l'une quelconque des revendications 1 à 3, dans lequel le moyen de réinitialisation (12) comporte une mémoire de données intégrée dans laquelle sont stockés plusieurs états prédéterminés, dans lequel la sélection de l'état prédéfini devant être fourni en sortie au niveau de l'étage de sortie (13) est effectuée en fonction du signal de sortie de l'étage de sortie (13).

6. Procédé de commande d'un dispositif de commande d'un appareil de commande de véhicule automobile, comportant les étapes consistant à :
a) recevoir par l'intermédiaire d'un bus de données (100) au moins un bloc de données comportant des ordres de commande,
b) vérifier l'intégrité du bloc de données reçu à l'aide d'un moyen de vérification (11),
c) réinitialiser un étage de sortie du dispositif de commande (13) à un état prédéfini lorsqu'il est établi que l'intégrité du bloc de données reçu n'est pas disponible, dans lequel l'étage de sortie (13) est configuré pour fournir sortie un signal de sortie correspondant aux ordres de commande.

7. Procédé selon la revendication 6, dans lequel, lors de la réinitialisation, l'état prédéfini est chargé à partir d'une mémoire de données du dispositif de commande, qui est intégrée au dispositif de commande.

8. Procédé selon l'une quelconque des revendications 6 à 7, dans lequel, lors de l'apparition d'une intégrité erronée, un signal d'erreur est fourni en sortie par l'intermédiaire d'un canal de retour à un moyen de traitement de données qui émet les blocs de données.

9. Procédé selon l'une quelconque des revendications 6 à 8, dans lequel, avant la vérification, le signal de sortie de l'étage de sortie (13) est établi d'une manière qui correspond aux ordres de commande.

10. Procédé selon l'une quelconque des revendications 6 à 9, dans lequel plusieurs états prédéterminés sont stockés, dans lequel la sélection de l'état prédéfini est effectuée en fonction du signal de sortie (104) de l'étage de sortie (13).
